# EUROPÄISCHE PATENTSCHRIFT

(11) **EP 2 684 237 B1**
(45) Veröffentlichungstag und Bekanntmachung des Hinweises auf die Patenterteilung: **14.01.2015**
(21) Anmeldenummer: 12708104.0
(22) Anmeldetag: 28.02.2012
(51) Int. Cl.: H01M 2/20

(54) **VERBINDER ZUR HERSTELLUNG EINER ELEKTRISCH LEITFÄHIGEN VERBINDUNG ZWISCHEN MINDESTENS DREI TERMINALS VON BATTERIEZELLEN**
CONNECTOR FOR PRODUCING AN ELECTRICALLY CONDUCTIVE CONNECTION BETWEEN AT LEAST THREE TERMINALS OF BATTERY CELLS
CONNECTEUR POUR ÉTABLIR UNE LIAISON ÉLECTROCONDUCTRICE ENTRE AU MOINS TROIS BORNES D'ÉLÉMENTS DE BATTERIE

(30) Priorität: 08.03.2011 DE 102011005222
(43) Veröffentlichungstag der Anmeldung: 15.01.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: REITZLE, Alexander, 89231 Neu-Ulm (DE)
(74) Vertreter: Bee, Joachim
(86) Internationale Anmeldenummer: PCT/EP2012/053314
(87) Internationale Veröffentlichungsnummer: WO 2012/119886

(56) Entgegenhaltungen:
- EP-A1- 0 570 590
- US-A- 4 117 969
- US-A1- 2010 028 762
- US-A1- 2010 247 997

## Beschreibung

Die vorliegende Erfindung betrifft einen Verbinder zur Herstellung einer elektrisch leitfähigen Verbindung zwischen mindestens drei Terminals von Batteriezellen sowie ein Batteriemodul mit dem erfindungsgemäßen Verbinder.

### Stand der Technik

Eine Batterie, die eine oder mehrere galvanische Batteriezellen umfasst, dient als elektrochemischer Energiespeicher und Energiewandler. Bei der Entladung der Batterie beziehungsweise der jeweiligen Batteriezelle wird in der Batterie gespeicherte chemische Energie durch elektrochemische Redoxreaktion in elektrische Energie umgewandelt. Diese elektrische Energie kann je nach Bedarf von einem Nutzer angefordert werden.

Insbesondere in Hybrid- und Elektrofahrzeugen werden in so genannten Batterie Packs Lithium-Ionen-Batterien oder Nickel-Metallhydrid-Batterien eingesetzt, die aus einer großen Anzahl in Serie geschalteter elektrochemischer Zellen bestehen. Üblicherweise dient dabei ein Batteriemanagementsystem inklusive einer Batteriezustandserkennung zur Sicherheitsüberwachung und zur Gewährleistung einer möglichst hohen Lebensdauer.

Einzelne Batteriezellen werden dabei mittels Verbindern zu einer Batterie geschaltet, die wiederum durch die Anordnung von weiteren Verbindern zu den Batterie Packs geschaltet werden. Oft werden die Batteriezellen für den Aufbau von Gesamtsystemen in einer elektrischen Reihenschaltung miteinander verbunden, wodurch die Kapazität und der maximal verfügbare Strom konstant bleiben, die Spannung des Systems aber deutlich erhöht wird (bis zu mehreren hundert Volt). Eine parallele Verschaltung von Zellen findet nur begrenzt statt. In der Regel werden in diesem Fall nur maximal zwei Batteriezellen parallel verschaltet, da im Falle eines Kurzschlusses in einer der beiden Batteriezellen die jeweils andere Batteriezelle mit einem langen, hohen Kurzschlussstrom belastet wird.

Es hat sich dabei weitgehend durchgesetzt, dass die Batteriezellen und Verbinder durch Schraubverbindungen miteinander verbunden werden. Die Kathode beziehungsweise der Pluspol der Batteriezelle ist dabei aus Aluminium und die Anode beziehungsweise der Minuspol aus Kupfer. Zur Herstellung einer elektrisch leitfähigen Verbindung zwischen den Batteriezellen wird ein Zellverbinder eingesetzt, der auf ein Außengewinde am Terminal aufgesetzt wird und mittels einer Mutter festgezogen wird.

Weitere alternative Arten der Zellverbindung umfassen die Herstellung eines Materialschlusses zwischen dem Zellverbinder und dem jeweiligen Terminal, wie zum Beispiel durch Schweißen oder Löten, oder die Herstellung einer form-und/oder kraftschlüssigen Verbindung, beispielsweise unter Verwendung von Nieten.

Da wie oben angeführt im Falle eines Kurzschlusses eine der beiden Batteriezellen mit einem langen, hohen Kurzschlussstrom belastet wird, sind Batteriezellen mit hohem Energieinhalt (so genannte Hochenergiezellen) mit inneren Sicherungen ausgestattet, welche bei einer solchen längeren Belastung durchbrennen und die Batteriezellen und das System dadurch schützen. Dieser Schutz hat jedoch den Nachteil, dass die Batteriezellen zwangsläufig ausgetauscht werden müssen. Bei Batteriezellen mit niedrigerer Kapazität kommt ein solcher Schutz gar nicht zum Einsatz.

### Offenbarung der Erfindung

Erfindungsgemäß wird ein Verbinder bereitgestellt, welcher sich zur Herstellung einer elektrisch leitfähigen Verbindung zwischen mindestens drei Terminals von Batteriezellen eignet. Unter einem Terminal wird dabei der Teil einer Batteriezelle verstanden, der in einem Batteriezellenkörper mit einer Elektrode elektrisch leitfähig verbunden ist und mit einem Abschnitt, dem so genannten Batteriepol, aus dem Batteriezellenkörper herausragt. Der Verbinder umfasst mindestens drei Befestigungsbereiche, in denen jeweils ein Terminal einer Batteriezelle befestigbar oder befestigt ist. Außerdem umfasst der Verbinder mindestens zwei elektrisch leitende Verbindungsbereiche. Jeder der Verbindungsbereiche ist zwischen einem Paar der Befestigungsbereiche angeordnet und verbindet leitend das Paar der Befestigungsbereiche. Hierbei können die Verbindungsbereiche und die Befestigungsbereiche ohne strukturelle Bereichsgrenze ineinander übergehen. Zum Beispiel kann der Verbinder insgesamt einstückig geformt sein. In diesem Fall sind verschiedene Unterteilungen in Verbindungsbereiche und Befestigungsbereiche denkbar, und der Verlauf einer Bereichsgrenze ist konzeptioneller Natur.

Jeder der Verbindungsbereiche umfasst außerdem einen Teilbereich, welcher einen Querschnitt senkrecht zu einer das Paar von Befestigungsbereichen verbindenden Linie aufweist, dessen Querschnittsfläche derart reduziert ist, dass es bei erhöhtem Stromfluss in dem Teilbereich zu einem Durchschmelzen des Teilbereichs kommt. Genauer existiert ein Schnitt durch den Teilbereich senkrecht zu der das Paar von Befestigungsbereichen verbindenden Linie mit einem reduzierten Flächeninhalt. Die verbindende Linie liegt im Wesentlichen parallel zu einer Stromrichtung, in welcher ein Strom zwischen den Befestigungsbereichen, welche der Verbindungsbereich verbindet, im betriebsgemäßen Zustand fließt, wenn der Verbinder mit den Terminals von Batteriezellen verbunden ist.

Durch die reduzierte Querschnittsfläche ist der elektrische Widerstand in dem Teilbereich erhöht, und es kommt bei erhöhtem Stromfluss in dem Teilbereich zu einem Temperaturanstieg, welcher ein Durchschmelzen des Teilbereichs verursacht. Durch das Durchschmelzen des Teilbereichs wird eine Trennung des Verbinders erreicht, und damit eine Abkopplung einer (defekten) Batteriezelle aus dem Gesamtverband. Hierdurch wird eine Parallelschaltung von mehr als zwei Batteriezellen ermöglicht und gleichzeitig eine Sicherung bereitgestellt, welche bei dem Versagen einer der Batteriezellen im Parallelverbund zum Tragen kommen kann.

Daher ist bevorzugt vorgesehen, dass die Querschnittsfläche derart reduziert ist, dass es zu einem Durchschmelzen des Teilbereichs kommt, wenn der in dem Teilbereich fließende Strom einen vorbestimmten Stromschwellenwert übersteigt, welcher auf eine Fehlfunktion einer mit dem Verbinder verbundenen Batteriezelle schließen lässt. Insbesondere ist dies der Fall, wenn es zu einem Kurzschluss in der mit dem Verbinder verbundenen Batteriezelle kommt. Es ist somit möglich, mehr als zwei Batteriezellen miteinander parallel zu verschalten und gleichzeitig die Gefahr eines thermischen Durchgehens im Falle eines Kurzschlusses in einer der Batteriezellen und der damit verbundenen Entladung der parallel verschalteten Batteriezellen zu reduzieren.

Typischerweise ist der Verbinder streifenförmig ausgebildet und ist aus elektrisch gut leitendem Material, insbesondere Kupfer oder Aluminium geformt.

Eine Reduzierung der Querschnittsfläche in dem Teilbereich wird bevorzugt dadurch erreicht, dass der den Teilbereich umfassende Verbindungsbereich in diesem Teilbereich mindestens eine Aussparung oder Ausstanzung aufweist, beispielsweise ein Langloch, einen Schlitz oder eine Vielzahl von in einer Reihe angeordneten Löchern. Dies ermöglicht eine vereinfachte Herstellung des Verbinders.

Bevorzugt weist der Verbinder genau drei Befestigungsbereiche und genau zwei zwischen diesen angeordnete Verbindungsbereiche auf.

Ein weiterer Aspekt der Erfindung betrifft ein Batteriemodul, welches mindestens drei Batteriezellen, bevorzugt Lithium-lonen-Batteriezellen, und wenigstens einen erfindungsgemäßen Verbinder umfasst, welcher Terminals der Batteriezellen verbindet.

Ein weiterer Aspekt der Erfindung betrifft eine Batterie, bevorzugt eine Lithium-Ionen-Batterie, welche eine Mehrzahl von erfindungsgemäßen Batteriemodulen umfasst, welche in Reihe oder parallel geschaltet sind.

Ein weiterer Aspekt der Erfindung betrifft ein Kraftfahrzeug, insbesondere ein elektromotorisch antreibbares Kraftfahrzeug, welches wenigstens eine Batterie gemäß der Erfindung umfasst, wobei die Batterie mit einem Antriebssystem des Kraftfahrzeuges verbunden ist.

### Zeichnungen

Ausführungsbeispiele der Erfindung werden anhand der Zeichnungen und der nachfolgenden Beschreibung näher erläutert. Es zeigen:
Figur 1 einen Verbinder gemäß einer ersten Ausführungsform der Erfindung,
Figur 2 einen Verbinder gemäß einer zweiten Ausführungsform der Erfindung, und
Figuren 3 bis 5 Ersatzschaltbilder zur Veranschaulichung der Funktionsweise des erfindungsgemäßen Verbinders.

### Ausführungsformen der Erfindung

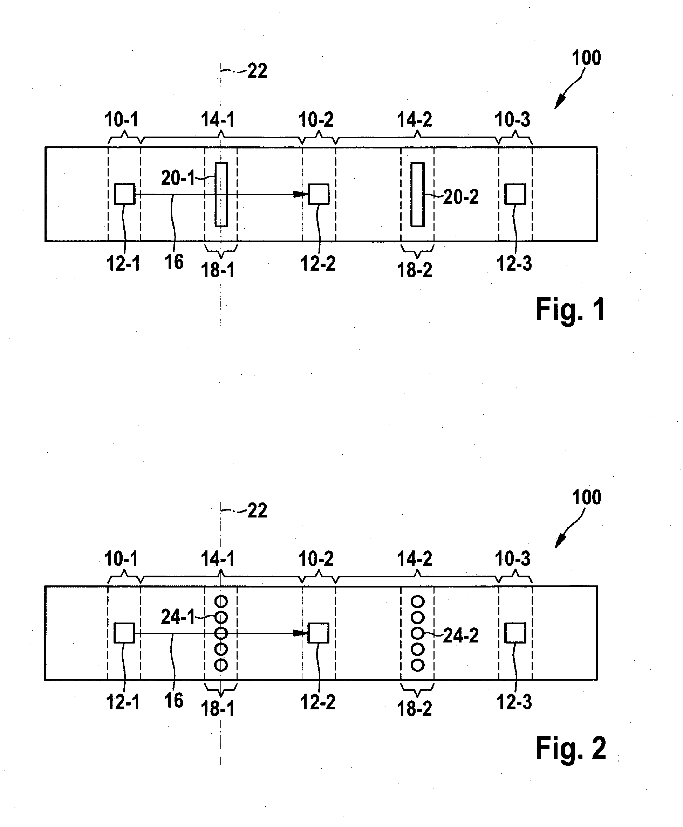

Figur 1 zeigt einen insgesamt mit 100 bezeichneten Verbinder gemäß einer ersten Ausführungsform der Erfindung. Der Verbinder 100 ist streifenförmig und einstückig ausgebildet und aus elektrisch gut leitendem Material wie Kupfer oder Aluminium geformt. Der Verbinder 100 umfasst einen ersten Befestigungsbereich 10-1, einen zweiten Befestigungsbereich 10-2 und einen dritten Befestigungsbereich 10-3. In jedem der drei Befestigungsbereiche 10-1, 10-2, 10-3 ist jeweils ein Befestigungspunkt 12-1, 12-2, 12-3 angeordnet, an welchen Terminals gleicher Polarität von drei nicht dargestellten Batteriezellen befestigbar oder befestigt sind. Außerdem umfasst der Verbinder 100 einen ersten Verbindungsbereich 14-1 und einen zweiten Verbindungsbereich 14-2, wobei jeder der Verbindungsbereiche 14-1, 14-2 jeweils zwischen einem Paar von Befestigungsbereichen angeordnet ist und diese leitend verbindet.

Genauer ist der erste Verbindungsbereich 14-1 zwischen dem ersten Befestigungsbereich 10-1 und dem zweiten Befestigungsbereich 10-2 angeordnet und verbindet diese leitend. Entsprechend ist der zweite Verbindungsbereich 14-2 zwischen dem zweiten Befestigungsbereich 10-2 und dem dritten Befestigungsbereich 10-3 angeordnet und verbindet diese leitend. Zwischen dem ersten Befestigungsbereich 10-1 und dem zweiten Befestigungsbereich 10-2, insbesondere zwischen dem ersten Befestigungspunkt 12-1 und dem zweiten Befestigungspunkt 12-2 kann eine Verbindungslinie 16 gedacht werden, welche im Wesentlichen die Richtung eines Stromflusses zwischen den Terminals der Batteriezellen definiert.

Jeder der Verbindungsbereiche 14-1, 14-2 umfasst Teilbereiche 18-1, 18-2, in denen Aussparungen in Form von Langlöchern 20-1, 20-2 vorgesehen sind. Ein Schnitt 22 durch den Teilbereich 18-1, welcher senkrecht zur Verbindungslinie 16 verläuft, weist durch das Vorhandensein des Langloches 20-1 eine Querschnittsfläche auf, welche im Vergleich zum übrigen Verbindungsbereich 14-1 außerhalb des Teilbereichs 18-1 reduziert ist. Hierdurch ist der elektrische Widerstand im Teilbereich 18-1 erhöht, und es kommt zu einem starken Temperaturanstieg im ersten Teilbereich 18-1, wenn der in dem ersten Teilbereich 18-1 fließende Strom einen vorbestimmten Stromschwellenwert übersteigt, welcher auf einen Kurzschluss in einer mit dem Verbinder 100 verbundenen Batteriezelle, beispielsweise einer an dem ersten Befestigungspunkt 12-1 befestigten Batteriezelle, schließen lässt. Durch den starken Temperaturanstieg in dem ersten Teilbereich 18-1 kommt es in diesem zu einem Durchschmelzen und somit zu einer Durchtrennung des Verbinders 100 im ersten Teilbereich 18-1. Hierdurch wird eine Abtrennung der am ersten Befestigungspunkt 12-1 befestigten Batteriezelle erreicht.

Die Langlöcher 18-1, 18-2 sind derart dimensioniert, dass bei normaler Strombelastung der elektrische Widerstand im Vergleich zu einem vollständig ausgeformten Verbinder nicht wesentlich erhöht ist. Erst bei Strombelastungen, welche auf schwerwiegende Probleme bei den parallel verschalteten Batteriezellen hinweisen, insbesondere auf einen Kurzschluss in einer Batteriezelle, wird durch den verringerten Flächeninhalt des Teilbereiches 18-1 bei dem Schnitt 22 eine so große Temperaturerhöhung verursacht, dass es zum Durchschmelzen des Verbinders 100 kommt. Nach dem Durchschmelzen des ersten Teilbereichs 18-1 bleibt der Verbinder 100 innerhalb des zweiten und dritten Befestigungsbereiches 10-2, 10-3 und des zweiten Verbindungsbereiches 14-2 intakt, so dass durch diese parallel verbundene Batteriezellen weiterhin verwendet werden können. Die Dimensionierung der Querschnittsfläche 22 legt fest, gegen welche Ströme der Verbinder 100 abgesichert ist.

Eine Reparatur einer den Verbinder umfassenden Batterie ist möglich, indem der nunmehr defekte Verbinder 100 entfernt und durch einen neuen ersetzt wird bei gleichzeitigem Austausch der defekten Batteriezelle durch eine neue Batteriezelle.

Figur 2 zeigt den erfindungsgemäßen Verbinder 100 in einer zweiten Ausführungsform der Erfindung, welche sich von der in Figur 1 dargestellten Ausführungsform dadurch unterscheidet, dass statt zweier Langlöcher 18-1, 18-2 Aussparungen in Form einer Vielzahl von Löchern vorgesehen sind, welche in zwei Reihen 24-1, 24-2 angeordnet sind. Die Funktionsweise des Verbinders 100 gemäß der zweiten Ausführungsform der Erfindung entspricht im Wesentlichen der des in Figur 1 dargestellten Verbinders.

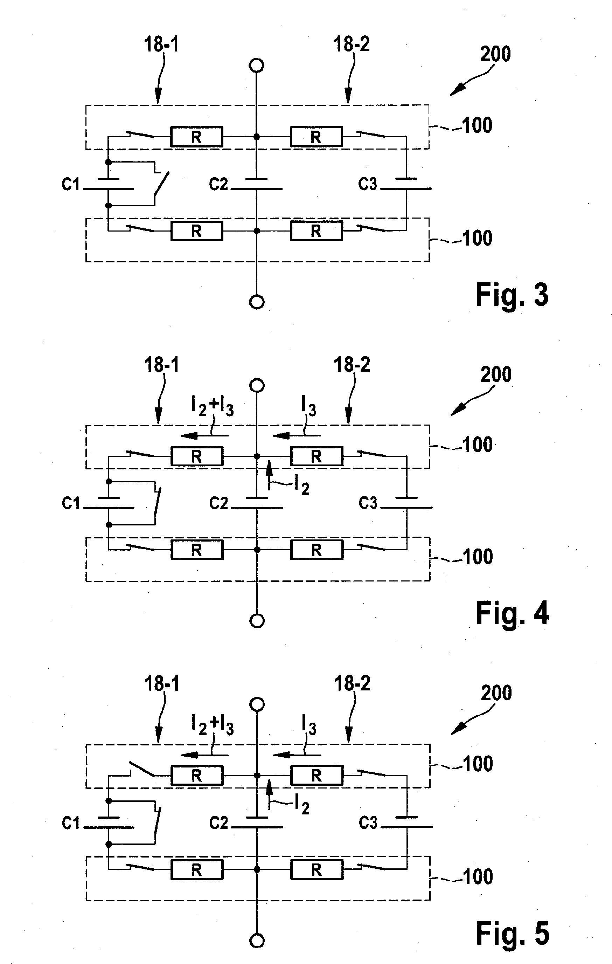

Die Figuren 3 bis 5 zeigen schematisch Ersatzschaltbilder zur Veranschaulichung der Funktionsweise des erfindungsgemäßen Verbinders 100. Figur 3 zeigt ein Batteriemodul 200, welches drei Batteriezellen C1, C2, C3 umfasst, welche parallel geschaltet sind und an ihren positiven beziehungsweise negativen Polen jeweils durch einen erfindungsgemäßen Verbinder 100 verbunden sind. Die Teilbereiche 18-1, 18-2 sind unter anderem jeweils durch ein Schaltsymbol für einen Widerstand R angedeutet. Eine der beiden dargestellten erfindungsgemäßen Verbinder 100 kann durch einen aus dem Stand der Technik bekannten Verbinder ersetzt sein, ohne die durch die Erfindung bezweckte Funktionsweise zu beeinträchtigen. Eine nicht dargestellte Batterie umfasst eine Mehrzahl der in Figur 3 dargestellten Batteriemodule 200, welche in Reihe oder parallel geschaltet sind.

In Figur 4 ist schematisch dargestellt, wie sich ein Kurzschluss in der Batteriezelle C1 auf die in Figur 3 dargestellte Anordnung auswirkt. Der Gesamtkurzschlussstrom, welcher in die erste Batteriezelle C1 fließt, setzt sich aus Strömen zusammen, welche aus der zweiten Batteriezelle C2 und der dritten Batteriezelle C3 geliefert werden. Hierdurch kommt es zu einer starken Erwärmung des Widerstandes R zwischen der ersten Batteriezelle C1 und der zweiten Batteriezelle C2, somit also in dem ersten Teilbereich 18-1 des Verbinders 100. Dieser erwärmt sich derart, dass es zu einem Durchschmelzen des Teilbereiches 18-1 und somit zu einer elektrischen Abtrennung der ersten Batteriezelle C1 kommt, welche in Figur 5 schematisch durch ein Schaltsymbol für einen geöffneten Schalter im Teilbereich 18-1 dargestellt ist.

## Patentansprüche

1. Verbinder (100) zur Herstellung einer elektrisch leitfähigen Verbindung zwischen mindestens drei Terminals von Batteriezellen (C1, C2, C3), **dadurch gekennzeichnet, dass**
der Verbinder (100) mindestens drei Befestigungsbereiche (10-1, 10-2, 10-3), in denen jeweils ein Terminal einer Batteriezelle (C1, C2, C3) befestigbar oder befestigt ist, und mindestens zwei elektrisch leitende Verbindungsbereiche (14-1,14-2) umfasst, wobei jeder der Verbindungsbereiche (14-1, 14-2) zwischen einem Paar der Befestigungsbereiche (10-1,10-2; 10-2, 10-3) angeordnet ist, dieses leitend verbindet und einen Teilbereich (18-1, 18-2) umfasst, welcher einen Querschnitt (22) senkrecht zu einer das Paar von Befestigungsbereichen (10-1, 10-2;10-2, 10-3) verbindenden Verbindungslinie (16) aufweist, dessen Querschnittsfläche derart reduziert ist, dass es bei erhöhtem Stromfluss in dem Teilbereich (18-1,18-2) zu einem Durchschmelzen des Teilbereichs (18-1,18-2) kommt, wobei mindestens eine der drei Batteriezellen von der elektrisch leitfähigen Verbindung abgekoppelt wird.

2. Verbinder (100) nach Anspruch 1, wobei die Querschnittsfläche derart reduziert ist, dass es zu einem Durchschmelzen des Teilbereichs (18-1, 18-2) kommt, wenn der in dem Teilbereich (18-1, 18-2) fließende Strom einen vorbestimmten Stromschwellenwert übersteigt, welcher auf eine Fehlfunktion einer mit dem Verbinder (100) verbundenen Batteriezelle (C1, C2, C3), insbesondere auf einen Kurzschluss in der mit dem Verbinder (100) verbundenen Batteriezelle (C1, C2, C3), schließen lässt.

3. Verbinder (100) nach einem der vorangehenden Ansprüche, wobei der Verbinder (100) streifenförmig ausgebildet ist.

4. Verbinder (100) nach einem der vorangehenden Ansprüche, wobei der Verbindungsbereich (14-1, 14-2) in dem Teilbereich (18-1, 18-2) mindestens eine Aussparung oder Ausstanzung (20-1, 20-2; 24-1, 24-2) aufweist.

5. Verbinder (100) nach Anspruch 4, wobei der Verbindungsbereich (14-1, 14-2) in dem Teilbereich (18-1, 18-2) ein Langloch (20-1, 20-2) oder einen Schlitz aufweist.

6. Verbinder (100) nach Anspruch 4, wobei der Verbindungsbereich (14-1, 14-2) in dem Teilbereich (18-1, 18-2) eine Vielzahl von in einer Reihe angeordneten Löchern (24-1, 24-2) aufweist.

7. Verbinder (100) nach einem der Ansprüche 2 bis 6, wobei der Verbinder (100) genau drei Befestigungsbereiche und genau zwei Verbindungbereiche aufweist.

8. Verbinder (100) nach einem der vorangehenden Ansprüche, wobei der Verbinder (100) aus elektrisch gut leitendem Material, insbesondere Kupfer oder Aluminium, geformt ist.

9. Batteriemodul (200), umfassend mindestens drei Batteriezellen (C1, C2, C3), **dadurch gekennzeichnet, dass** das Batteriemodul (200) wenigstens einen Verbinder (100) gemäß einem der vorangehenden Ansprüche umfasst, wobei der Verbinder (100) Terminals der Batteriezellen (C1, C2, C3) verbindet.

10. Batterie, insbesondere Lithium-Ionen-Batterie oder
Nickel-Metallhydrid-Batterie, umfassend eine Mehrzahl von Batteriemodulen (200) nach Anspruch 9, welche in Reihe oder parallel geschaltet sind.

11. Kraftfahrzeug, insbesondere elektromotorisch antreibbares Kraftfahrzeug,
**dadurch gekennzeichnet, dass** es wenigstens eine Batterie (200) nach Anspruch 10 umfasst, wobei die Batterie mit einem Antriebssystem des Kraftfahrzeuges verbunden ist.

## Claims

1. Connector (100) for producing an electrically conductive connection between at least three terminals of battery cells (C1, C2, C3), **characterized in that** the connector (100) comprises at least three fastening regions (10-1, 10-2, 10-3), in which in each case one terminal of a battery cell (C1, C2, C3) can be fastened or is fastened, and at least two electrically conductive connecting regions (14-1, 14-2), wherein each of the connecting regions (14-1, 14-2) is arranged between a pair of fastening regions (10-1, 10-2; 10-2, 10-3), conductively connects said pair of fastening regions and comprises a subregion (18-1, 18-2) which has a cross section (22) perpendicular to a connecting line (16) connecting a pair of fastening regions (10-1, 10-2; 10-2, 10-3) having a cross-sectional area which is reduced such that, in the event of an increased current flow in the subregion (18-1, 18-2), fusing of the subregion (18-1, 18-2) takes place, wherein at least one of the three battery cells is decoupled from the electrically conductive connection.

2. Connector (100) according to Claim 1, wherein the cross-sectional area is reduced in such a way that fusing of the subregion (18-1, 18-2) takes place when the current flowing in the subregion (18-1, 18-2) exceeds a predetermined current threshold value, which suggests a malfunction of a battery cell (C1, C2, C3) connected to the connector (100), in particular a short circuit in the battery cell (C1, C2, C3) connected to the connector (100).

3. Connector (100) according to one of the preceding claims, wherein the connector (100) has a strip-shaped formation.

4. Connector (100) according to one of the preceding claims, wherein the connecting region (14-1, 14-2) has at least one cutout or stamped-out portion (20-1, 20-2; 24-1, 24-2) in the subregion (18-1, 18-2).

5. Connector (100) according to Claim 4, wherein the connecting region (14-1, 14-2) has a slot (20-1, 20-2) or a slit in the subregion (18-1, 18-2).

6. Connector (100) according to Claim 4, wherein the connecting region (14-1, 14-2) has a multiplicity of holes (24-1, 24-2) arranged in a row in the subregion (18-1, 18-2).

7. Connector (100) according to one of Claims 2 to 6, wherein the connector (100) has precisely three fastening regions and precisely two connecting regions.

8. Connector (100) according to one of the preceding claims, wherein the connector (100) is shaped from a material with good electrical conductivity, in particular copper or aluminum.

9. Battery module (200), comprising at least three battery cells (C1, C2, C3), **characterized in that** the battery module (200) comprises at least one connector (100) according to one of the preceding claims, wherein the connector (100) connects terminals of the battery cells (C1, C2, C3).

10. Battery, in particular a lithium-ion battery or a nickel-metal hydride battery, comprising a plurality of battery modules (200) according to Claim 9, which battery modules are connected in series or parallel.

11. Motor vehicle, in particular a motor vehicle that can be driven by an electric motor, **characterized in that** it comprises at least one battery (200) according to Claim 10, wherein the battery is connected to a drive system of the motor vehicle.

## Revendications

1. Connecteur (100) pour établir une connexion électriquement conductrice entre au moins trois bornes de cellules de batterie (C1, C2, C3), **caractérisé en ce que** le connecteur (100) comprend au moins trois zones de fixation (10-1, 10-2, 10-3) dans lesquelles est ou peut être à chaque fois fixée une borne d'une cellule de batterie (C1, C2, C3), et au moins deux zones de connexion électriquement conductrices (14-1, 14-2), chacune des zones de connexion (14-1, 14-2) étant disposée entre une paire des zones de fixation (10-1, 10-2 ; 10-2, 10-3), reliant celle-ci de manière conductrice et comprenant une zone partielle (18-1, 18-2) qui présente une section transversale (22) perpendiculaire à une ligne de connexion (16) reliant la paire de zones de fixation (10-1, 10-2 ; 10-2, 10-3), dont la surface en section transversale est réduite de telle sorte qu'il se produise, en cas de flux de courant accru dans la zone partielle (18-1, 18-2) une fusion de la zone partielle (18-1, 18-2), au moins l'une des trois cellules de batterie étant désaccouplée de la connexion électriquement conductrice.

2. Connecteur (100) selon la revendication 1, dans lequel la surface en section transversale est réduite de telle sorte qu'il se produise une fusion de la zone partielle (18-1, 18-2) lorsque le courant s'écoulant dans la zone partielle (18-1, 18-2) dépasse une valeur seuil de courant prédéterminée qui permet de conclure à une fonction d'erreur d'une cellule de batterie (C1, C2, C3) connectée au connecteur (100), en particulier à un court-circuit dans la cellule de batterie (C1, C2, C3) connectée au connecteur (100) .

3. Connecteur (100) selon l'une quelconque des revendications précédentes, dans lequel le connecteur (100) est réalisé en forme de ruban.

4. Connecteur (100) selon l'une quelconque des revendications précédentes, dans lequel la zone de connexion (14-1, 14-2) dans la zone partielle (18-1, 18-2) présente au moins un évidement ou un estampage (20-1, 20-2 ; 24-1, 24-2).

5. Connecteur (100) selon la revendication 4, dans lequel la zone de connexion (14-1, 14-2) dans la zone partielle (18-1, 18-2) présente un trou oblong (20-1, 20-2) ou une fente.

6. Connecteur (100) selon la revendication 4, dans lequel la zone de connexion (14-1, 14-2) dans la zone partielle (18-1, 18-2) présente une pluralité de trous (24-1, 24-2) disposés en rangée.

7. Connecteur (100) selon l'une quelconque des revendications 2 à 6, dans lequel le connecteur (100) présente exactement trois zones de fixation et exactement deux zones de connexion.

8. Connecteur (100) selon l'une quelconque des revendications précédentes, dans lequel le connecteur (100) est formé d'un matériau bon conducteur de l'électricité, en particulier de cuivre ou d'aluminium.

9. Module de batterie (200), comprenant au moins trois cellules de batterie (C1, C2, C3), **caractérisé en ce que** le module de batterie (200) comprend au moins un connecteur (100) selon l'une quelconque des revendications précédentes, le connecteur (100) reliant des bornes des cellules de batterie (C1, C2, C3).

10. Batterie, en particulier batterie lithium-ion ou batterie nickel-hydrure métallique, comprenant une pluralité de modules de batterie (200) selon la revendication 9, qui sont montés en série ou en parallèle.

11. Véhicule automobile, en particulier véhicule automobile à commande par moteur électrique, **caractérisé en ce qu'**il comprend au moins une batterie (200) selon la revendication 10, la batterie étant connectée à un système d'entraînement du véhicule automobile.
